# EUROPEAN PATENT APPLICATION

(11) **EP 2 420 358 A2**
(43) Date of publication of application: **22.02.2012**
(21) Application number: 11177720.7
(22) Date of filing: 16.08.2011
(51) Int. Cl.: B25F 5/02, B25B 23/18

(54) **Power Tool with Light Emitting Assembly**

(30) Priority: 18.08.2010 US 859036
(71) Applicant: Black & Decker Inc., Newark, Delaware 19711 (US)
(72) Inventor: Osborne, Stephen, P., Pikesville, MD Maryland 21208 (US); Dixon, Eva, J, Columbia, MD Maryland 21044 (US); Hatfield, Eric E., Jacobs, PA Pennsylvania 17407 (US); Krout, Daniel L., New Freedom, PA Pennsylvania 17349 (US); Robertson, Corey, G, Felton, PA Pennsylvania 17322 (US); Friedman, Brian E., Baltimore, MD Maryland 21231 (US)
(74) Representative: Bell, Ian Stephen

(57) **Abstract**

A power tool (50) including an end effector (53) rotatable with respect to the housing (51), a collar (52) non-rotatably coupled to the housing, an annular printed circuit board (PCB) (82) rotatably fixed with respect to the housing, and a light element (84) operatively connected to the PCB and adjacent to the end effector and in a recess of the collar and located to illuminate a workpiece machined by the power tool.

## Description

The present invention relates generally to handheld power tools. More particularly, the present invention relates to handheld power tools having a light configured to shine onto a workpiece machined by the power tool.

This section provides background information related to the present invention which is not necessarily prior art. Power tools are often used in a variety of conditions ranging from well-lit indoor work spaces to outside construction sites or other areas that are not always well-lit. Accordingly, it is desirable to provide a method or apparatus that permits a power tool to have a lighting feature that will illuminate the workpiece being machined or worked on by the power tool. Such a lighting feature will assist a user to be able to adequately view the workpiece or work area that is being worked on or machined by the power tool even in substandard light conditions.

Because power tools may be used in adverse environmental conditions, it is desirable to protect such a lighting feature from the adverse environmental conditions.

This section provides a general summary of the invention, and is not a comprehensive disclosure of its full scope or all of its features. In accordance with one embodiment of the present invention, a power tool is provided. The power tool includes a housing, an end effector rotatable with respect to the housing, a collar non-rotatable with respect to the housing, a circuit board, e.g. a printed circuit board (PCB), fixed with respect to the housing, e.g. using a heat stake process, and a lighting element operatively connected to the circuit board. The lighting element preferably is adjacent to the end effector and in a recess of a transparent housing and located to illuminate a workpiece machined by the power tool.

In accordance with another embodiment of the present invention, a power tool is provided. The power tool includes a rotatable end effector, a non-rotatable collar, and a substantially annular circuit board e.g. a (PCB). Surface mount lighting elements preferably are operatively connected to the circuit board and are adjacent to the end effector to illuminate a workpiece machined by the power tool. The collar has a transparent cover preferably supporting the circuit board and wires configured to provide power to the circuit board for illuminating the lighting elements. The lighting elements are arranged on the circuit board about the end effector. A portion of the end effector extends through a hole defined by the transparent cover and circuit board. The transparent cover preferably defines a groove and the circuit board is coupled in the groove preferably using a heat staking process.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways.

Further areas of applicability will become apparent from the description provided herein. The description and specific examples in this summary are intended for purposes of illustration.

The drawings described herein are for illustrative purposes only of selected embodiments and not all possible implementations.
Figures 1 a and 1b represent side views of two embodiments of power tools according to the present invention;
Figure 2 represents a nose-piece subassembly of the power tool shown in Figure 1;
Figure 3 represents a cross-sectional view of a holder subassembly associated with the nosepiece shown in Figure 2;
Figure 4 represents a perspective cross-sectional view of the holder subassembly shown in Figures 2 and 3;
Figure 5 represents a perspective view of a transparent cover-circuit board subassembly according to the present invention;
Figure 6 represents a perspective cross-sectional view of the transparent circuit board subassembly shown in Figure 5;
Figure 7 represents a front perspective view of the subassembly shown in Figure 5;
Figure 8 represents a close-up view of the circuit board/transparent housing interface of the subassembly shown in Figure 5;
Figure 9 represents a rear perspective view of an alternate holder subassembly according to the present invention;
Figure 10 represents a perspective cross-sectional view of the holder subassembly shown in Figure 9; and
Figure 11 represents a front view of the holder subassembly shown in Figures 9 and 10.

Corresponding reference numerals indicate corresponding parts throughout the several views of the drawings.

Example embodiments will now be described more fully with reference to the accompanying drawings. According to some embodiments of the invention, light emitting elements, such as light emitting diodes (LEDs), are placed in an annular or ring shape around part of the end effector and are configured to shine forward to illuminate the tool or accessory held by the end effector and the workpiece being machined by the tool. The end effector may be a tool or accessory holder mounted to an output spindle of the tool, e.g. as described in US Patent Application 12/394426, entitled "Bit Retention Device". Other examples of end effectors that may be used in accordance with the invention may be the 7000 Series chuck manufactured and marketed by the Jacobs Chuck Manufacturing Company of Clemson, SC, and quick change chucks similar to that found on products such as a DC825KA Impact Driver and a DC815KA impact Driver manufactured and marketed by the DeWalt Industrial Tool Company of Baltimore, MD.

Several different types of lighting elements can be used in accordance with the invention, such as light bulbs (for example, xenon bulbs) or other lighting elements. While having specific advantage, the LED lights discussed herein are an example, and do not limit embodiments in accordance with the invention to tools using LEDs. The LED lights, or other lighting elements, and associated parts are locked to the housing of the tool and do not rotate when the power tool is operated. It is, however, envisioned that the light elements can be incorporated into a rotatable member such as a chuck tightening ring. The lights may be powered by the same power source that provides power to the power tool's motor. In the case of cordless power tools, a battery powers the power tool and in the case of corded tools AC current is provided from a source voltage through a cord. This AC current may be modified according to the needs of the lighting device being employed. In the case of LED lights, a rectifier may be employed to convert AC current to DC.

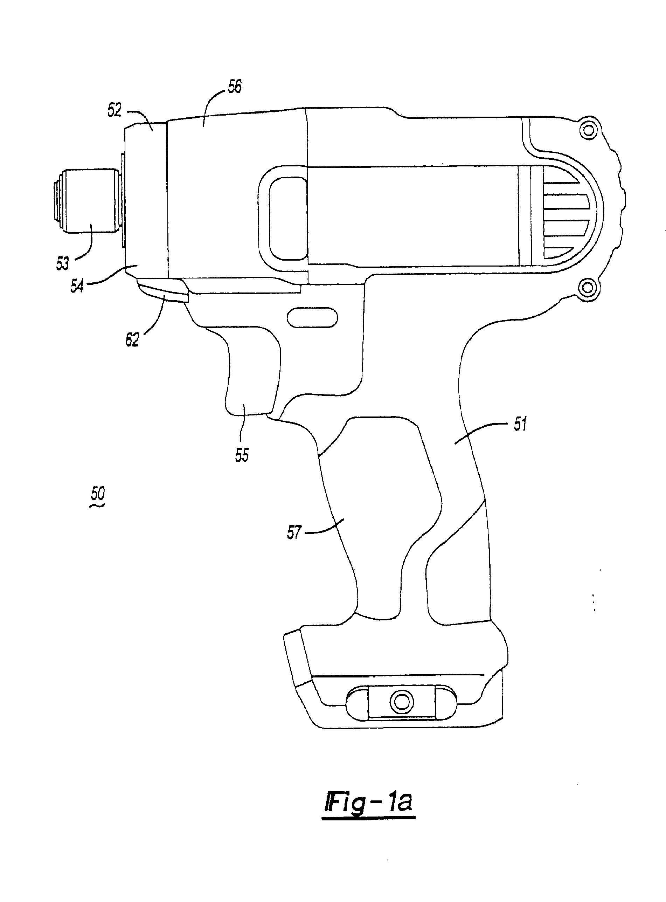

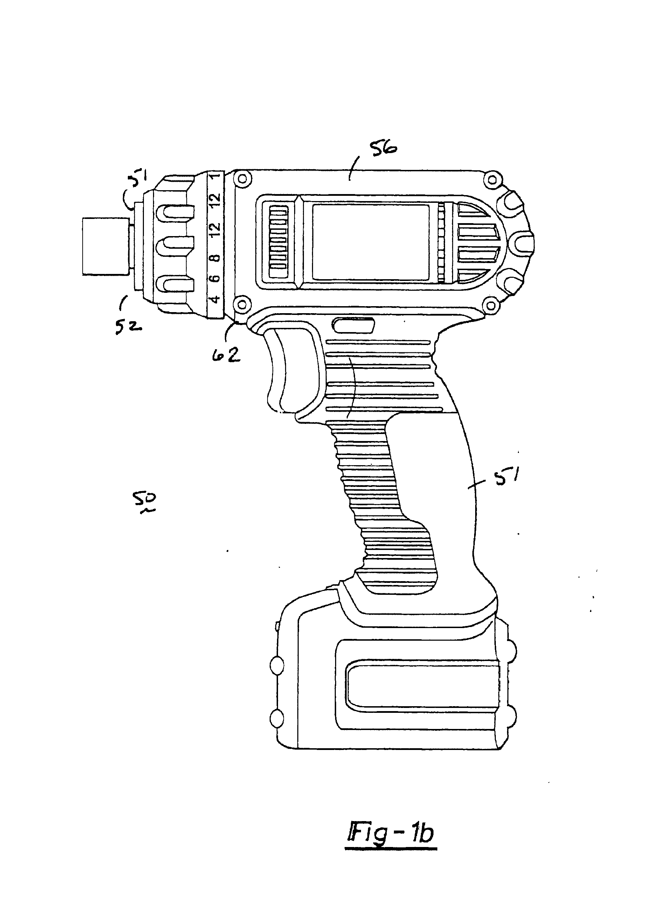

A first embodiment in accordance with the present invention is illustrated in Figure 1a. The power tool 50 has a housing 51 which can be of a clam shell type or any other suitable type housing. The power tool 50 may have a transmission housing 56 located at the front portion of the power tool 50 to encapsulate a portion of an end effector 53. A handle 57 projects downwardly from the housing 51 and is terminated with a battery. The transmission housing of the embodiment of Figure 1a contains a speed reduction transmission (e.g., a single-stage planetary transmission) and an impact mechanism that provides an intermittent rotary impact to the end effector (e.g., a Pott mechanism). The transmission housing of the embodiment of Figure 1b contains a speed reduction transmission (e.g., a multi-stage planetary transmission) and at least a portion of a torque clutch that disengages when a predetermined torque is reached.

The end effector 53 may be configured to hold an accessory or tool such as a drill bit or a driving type accessory such as a Philips or standard screwdriver. Other types of tools or accessories may be held and used in the end effector 53 as can be appreciated by one skilled in the art. The movement of the end effector 53 may be controlled by the trigger 55. The trigger 55 may selectively provide power from the battery to the motor located within the housing 51. In some embodiments of the invention, the more the trigger or switch 55 is depressed the more power may be applied to the motor which may cause the end effector 53 to spin faster. The battery provides the power to energize the motor and controllably turn the end effector 53.

As shown in Figure 1b, the power tool 50 may be equipped with a clutch collar. Although not shown, other embodiments in accordance with the teachings may not have a rotating clutch collar, but rather a different mechanism, such as a drill/hammer mode selector, a gear shifter, an on/off switch, a variable speed control, or other control mechanism. However, this specification will refer to a clutch collar as an example but does not limit embodiments in accordance with the invention to tools having clutch collars. The clutch collar may be rotated to adjust the torque setting at which the clutch disengages. A numbered scale may appear on the clutch collar in order to provide a user an indication of the setting of the clutch collar. In some embodiments the user may turn the clutch collar to a desired position by hand An example of a clutch and transmission that may work in accordance with the invention is shown in U.S. Patent No. 7,066,691 which is incorporated by reference in its entirety. Of course, other types of clutch and transmission mechanisms may be used in accordance with the invention.

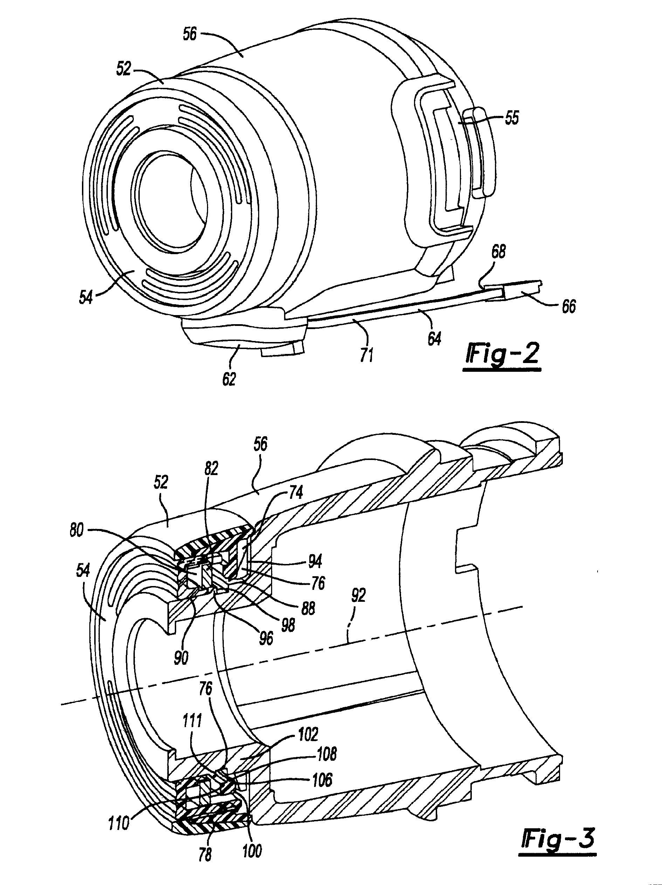

The power tool 50, for example, can be equipped with a light emitting holder 52 at an end of the transmission housing 56. As described below, the holder 52 functions to couple a lighting circuit to a tool housing 51. A transparent or transparent cover 54 is shown mounted in a recess defined in the holder 52. The holder 52 is mounted to the transmission housing 56 which is, in turn, supported by the housing 51. A chin shroud 62 is located on the holder 52 and provides a housing for a portion of the wires 64 (See Figure 2). The wires 64 have a connector 66 at a first end 68 are coupled at a second end 70 to a circuit board 82 disposed within the holder 52.

Figure 2 represents a perspective view of the holder 52 transmission housing 56 subassembly. Shown is the holder 52 having the associated transparent cover 54 fixably coupled to the housing transmission housing 56. An associated pig tail wire assembly 71 with associated connector 66 is positioned to allow the coupling to correspondingly connect on the housing 51. The transmission housing 56 has an associated coupling mechanism 55 which is used to mate the transmission housing 56 to the two-piece housing 51.

Figure 3 represents a cross-sectional view of the holder 52 transmission housing 56 subassembly. The holder 52 can be coupled to the transmission housing 56 using a plurality of snap features, or bayonet mechanisms 74 which are configured to interface with a corresponding L-shaped channel 76 defined within the transmission housing 56. Disposed within a channel 78 defined by the holder 52 is the transparent cover 54. As described below, the transparent cover 54 itself defines a transparent cover channel 80 which annularly supports an associated circuit board 82 having a plurality of surface mounted light emitting diodes (LEDS) 84. As described in detail below, the circuit board 82 is held into the transparent channel 80 using a locking member 86 which is heat staked to the circuit board 82 to effect a solid non-rotatable fixation of the circuit board to the transmission housing 56.

The holder 52 is coupled to a stepped portion 88 of the transmission housing 56. The stepped portion 88 has a first surface 90 which is generally parallel to the centerline 92 of the tool 50. Generally perpendicular to this surface is a second surface 94 which acts as an abutment for the holder 52. The first surface 90 of the stepped portion 88 has a protruding flange 96 which functions as a locking feature to couple the holder 52 into the stepped portion 88. The flange 96 has a ramped surface 98 which facilitates the snapping of a corresponding holder 52 locking feature 100 onto the stepped portion 88. Defined within a second portion 102 the first surface 90 comprises the locking groove or channel 76. The locking groove 76 is annularly formed within the second portion 102 or can be formed of a plurality of radially disposed intermittent coupling grooves. The locking feature 74 comprises a chamfered flange member 106 having a ramped interfaced surface 108 and opposed planar bearing surface 110. The planar bearing surface 110 is configured to interface with a corresponding planar bearing surface 111 defined either on the flange 96 or locking groove or channel 76 defined within second portion 102 of the first surface 90.

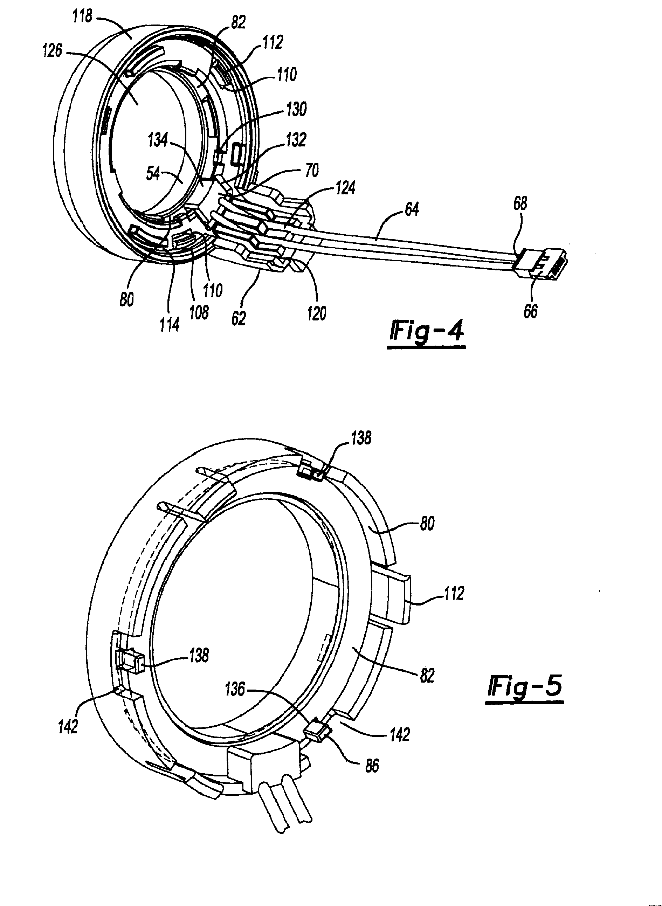

Figure 4 represents a perspective view of the holder 52 in subassembly form. The holder 52 contains a mounting member 108 which defines a plurality of radially disposed coupling slots 110. The slots 110 are configured to accept a corresponding set of transparent cover snap coupling members 112. The snap coupling members 112 are configured to bear against an inner surface 114 of the mounting member 108. Protruding from the inner surface 114 are three depending coupling flanges which are configured to couple the holder 52 to the transmission housing 56.

The holder 52 has a generally cylindrical exterior surface 118. The exterior surface 118 functions to encapsulate the transparent cover 54, mounting member 108 and circuit board 82. The mounting member 108 has a depending wire support member 120 having a center flanged portion 122 which defines a pair of generally elongated wire bearing slots 124. The slots are configured to accept the pair of power wires 64 from the wire harness pig tail assembly 71. The wire support member 120 is generally disposed within the chin shroud 62 and facilitates the protection of the light source power wires. The mounting member 108 defines an axial through bore 126. The through bore 126 has an inner surface 128 with a plurality of associated stand off flanges 130. The stand off flanges 130 function to apply pressure onto the circuit board 82 when the mounting member is engaged with the holder 52. Further defined within the inner surface 128 is a notch 132 configured to accept a wire harness strain relief member 134. The wire harness strain relief member 134 has a pair of curved internal surfaces which accept the bent wires 64 in a manner to minimize the overall axial length of the holder 52.

Figure 5 represents a rear perspective view of the transparent cover 54 circuit board 82 subassembly. As shown, the circuit board 82 is generally circular and is disposed within the transparent cover channel 80. The circuit board 82 defines a plurality of radially disposed notches 136 on the exterior radial periphery of the circuit board. The notches 136 accept corresponding flanges 86 which are defined radially within an inner bearing surface 140 of the transparent cover channel 80. Defined within the transparent cover and adjacent to the flanges 138 are corresponding notches 142 which have a depth generally corresponding to the locational position of the circuit board 82. After the circuit board 82 is placed within the channel 80, the flanges 138 are melted, thereby fixably coupling the circuit board 82 within the transparent cover 54 using a heat staking process.

The couplers or attachment mechanisms between the circuit board 82 and the transparent cover 54, the holder 52 and the transmission case 56, or the holder 52 and the transparent cover 54 can take the form of the heat stake joint, the bayonet joint, or the locking flange within a slot, exemplary embodiments of which are described above. The couplers or attachment mechanisms are configured to withstand the extreme cyclic torsional loading associated with hand held power tools. In this regard, the joints are configured to prevent vibrational noise or damage to these components, especially to the PCB.

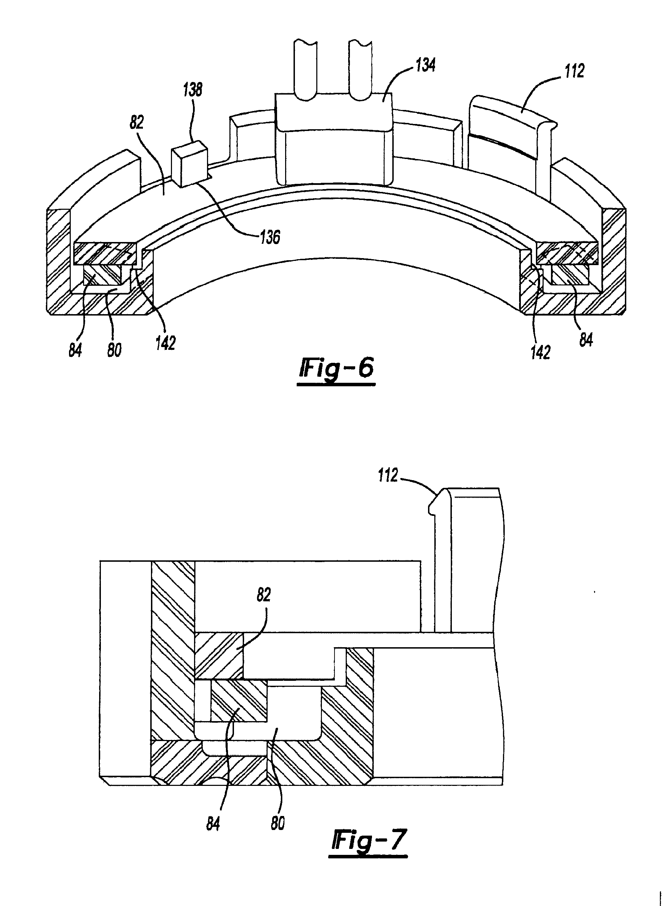

Figures 6 and 7 represent cross-sectional perspective views of the subassembly shown in Figure 5. Shown is the transparent cover channel 80, a coupling flange 138, relief member 134 and snap member 112. The channel 80 defines an inner ledge 142 which axially supports the circuit board 82 in a position which axially locates the LED 84 at the proper distance from the transparent cover 54. The distance allows for the proper focusing of the light from the LED on to a workpiece.

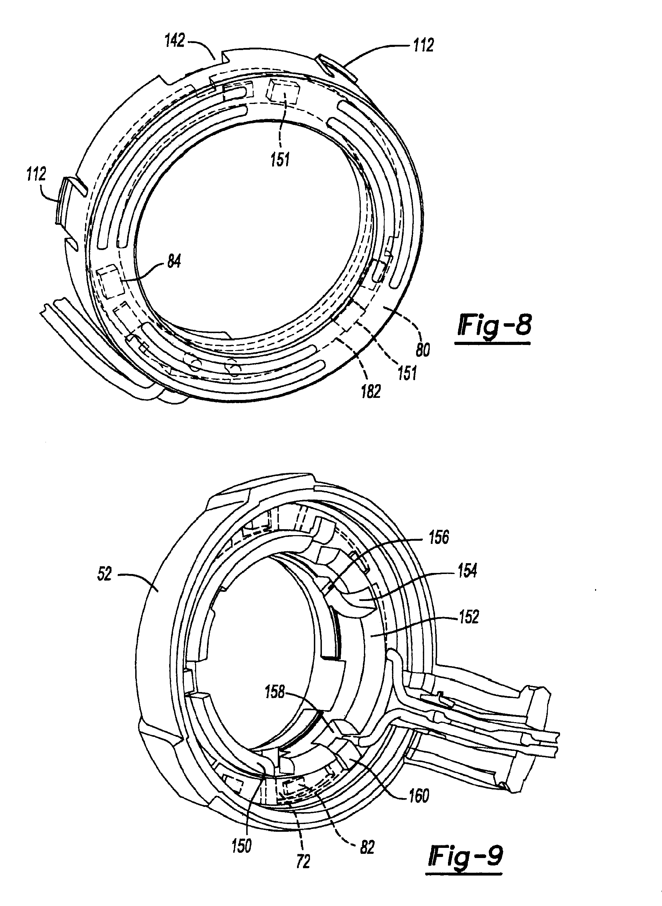

Figure 8 represents a front view of the transparent cover/circuit board subassembly shown in Figures 5 and 6. Shown is the positional position of the LEDs 84 with respect to the various snap and coupling features. While surface mounted LEDs 84 are shown and have their own particular advantages, it should be envisioned that non-surface mount LEDs could be used. Shown adjacent to the LEDs 84 is a plurality of surface mounted resistors 151 which are electrically coupled to the LEDs 84.

Figures 9-11 represent an alternate holder 52 having an alternate circuit board to transparent cover coupling mechanism. In this regard, the holder 52 contains a transparent cover 150 having an inner tubular member 152. The inner tubular member 152 defines a generally L-shaped coupling channel 154. The L-shaped coupling channel 154 defines a protruding locking feature 156 which engages a corresponding locking bayonet feature on the transmission housing.

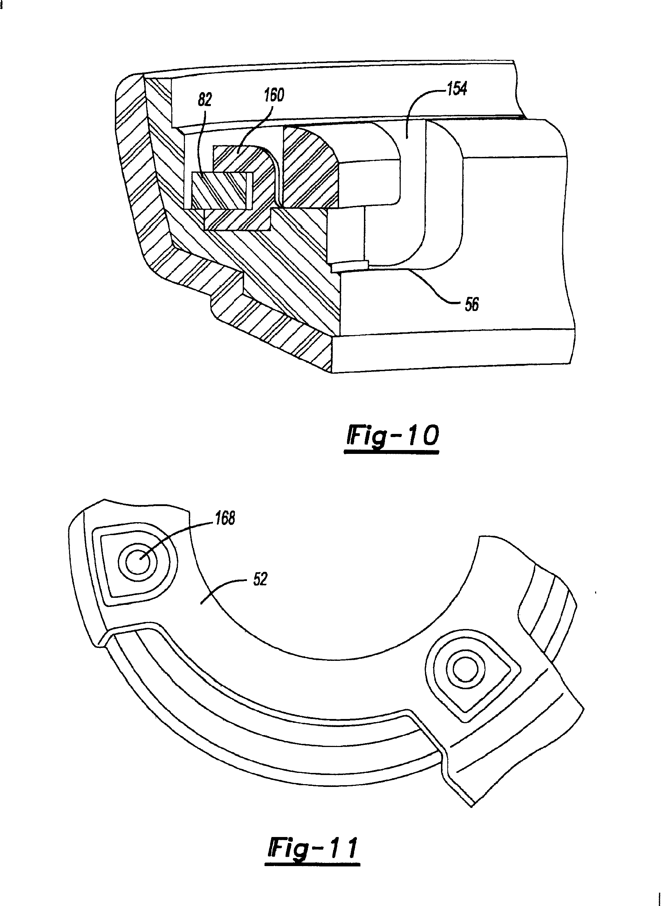

Further defined on the inner tubular member 152 is a plurality of coupling notches 158. The notches 158 have a depth corresponding to the preferred locational position of the circuit board 82 within the transparent cover channel 80. Adjacent to the coupling notches 158 are corresponding coupling flanges 160 which are configured to be positioned within a corresponding set of notches 162 defined within an inner surface 164 of the circuit board 72. As described above, the coupling flanges 160 are configured to be melted in a heat staking process to rotationally and longitudinally fix the circuit board 82 within the channel 80. As best seen in Figure 11, the holder can define discrete apertures to allow light to be emitted from the nose section of the tool onto the workpiece. The holder 52 has a elastomeric overmolding to prevent damage to the workpiece and to the tool if the tool inadvertently strikes the workpiece.

The foregoing description of the embodiments has been provided for purposes of illustration and description. It is not intended to be exhaustive. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

## Claims

1. A power tool comprising:
a housing;
an end effector rotatable with respect to the housing;
an annular collar defining a channel therein, said collar being coupled to the housing;
an annular circuit board disposed within the channel;
an annular transparent cover disposed within the annular collar, said transparent cover being rotatably and axially fixed to the circuit board; and
a plurality of lighting elements operatively connected to the circuit board and radially disposed about the end effector to illuminate a workpiece.

2. The power tool of Claim 1, wherein the lighting elements are a plurality of light emitting diodes radially disposed about the circuit board, and wherein a portion of the end effector extends through a hole defined by the transparent cover and printed circuit board.

3. The power tool of Claim 1 or Claim 2, wherein the transparent cover defines a groove and the circuit board is rotationally fixed within the groove.

4. The power tool of Claim 3, further comprising a plurality of heat meltable features on the transparent cover configured to allow the circuit board to be fixed into the groove in the transparent cover.

5. The power tool of any preceding claim, further including a chin portion defined by the annular collar, the chin portion providing a protective case for wires operable coupled to the lighting elements.

6. The power tool of Claim 5, further comprising a plug terminating the wires and wire holding structure on the chin portion for securing the wires in place.

7. The power tool of any preceding claim, further comprising collar fasteners defined on the annular collar configured to couple the annular collar to the housing.

8. The power tool of any preceding claim, further comprising alignment grooves on the circuit board and alignment tabs on the transparent cover, the alignment grooves on the circuit board and the alignment tabs on the transparent cover are dimensioned and located so that the alignment grooves on the circuit board rotatably fit into and are retained on the alignment tabs on the transparent cover to keep the circuit board and the transparent cover aligned.

9. The power tool of any preceding claim, further comprising an engaging structure on the transparent cover configured to bear against a corresponding engaging structure on a transmission housing to lock the transparent cover from rotating with respect to the transmission housing.

10. The power tool of any preceding claim, further comprising a coupling member covering the circuit board so that the lighting element and the circuit board are substantially entrapped by the coupling member and the transparent cover.

11. The power tool of Claim 10, wherein the coupling member is axially retained by an annular holder and attached to a transmission housing.

12. The power tool of Claim 11, further comprising a stepped portion on the transmission housing, and the annular holder resides in the stepped portion.

13. The power tool of Claim 11 or Claim 12, wherein the annular collar is axially locked to the transmission housing at least in part by the annular holder.

14. A power tool comprising:
a rotatable end effector;
an annular collar;
an annular circuit board;
light elements operatively connected to the annular circuit board and being adjacent to the end effector to illuminate a workpiece machined by the power tool; and
an annular cover having a transparent region, said annular cover axially supporting the circuit board, wherein a portion of the end effector extends through a hole defined by the cover and circuit board and wherein the cover defines a groove and the circuit board is located in the groove.

15. The power tool of Claim 14, further comprising a heat meltable flange on the transparent cover configured to allow the circuit board to be non-rotatably fixed into the groove in the transparent cover and held in place in the transparent cover.

16. A power tool comprising:
a motor housing;
a handle coupled to the motor housing;
a transmission case coupled to the motor housing;
an end effector extending from the transmission case;
a substantially annular collar;
a substantially annular circuit board having a plurality of light emitting elements;
a substantially annular cover defining a channel and having a transparent portion;
a first coupler disposed between the collar and the transmission case, said first coupler preventing axial displacement of the collar with respect to the transmission case;
a second coupler disposed between the circuit board and the cover, said second coupler preventing axial and rotational displacement of the circuit board with respect to the cover;
a third coupler disposed between the collar and the cover, said third coupler preventing axial displacement of the cover with respect to the collar; and
wherein at least a portion of the end effector extends through the collar , the circuit board, and the cover.

17. The power tool according to Claim 16, wherein at least one of the first coupler, the second coupler, and the third coupler comprises at least one of a heat stake joint, a bayonet joint, and an engaged flange; and/or wherein the cover defines an annular groove and the circuit board is disposed therein; and/or wherein at least a portion of the cover is disposed through the collar portion; and/or wherein the cover is transparent.
